# DEMANDE DE BREVET EUROPEEN

(11) **EP 2 034 398 A1**
(43) Date de publication de la demande: **11.03.2009**
(21) Numéro de dépôt: 07291079.7
(22) Date de dépôt: 07.09.2007
(51) Int. Cl.: G06F 3/048

(54) **Système interactif d'affichage d'informations numériques et procédé d'affichage afférent**

(71) Demandeur: Durandot franck, Dominique, 69004 Lyon (FR)
(72) Inventeur: Durandot franck, Dominique, 69004 Lyon (FR)
(74) Mandataire: Martin, Didier Roland Valéry

(57) **Abrégé**

- L'invention concerne un système interactif d'affichage d'informations numériques comprenant:
- un écran d'affichage (2) desdites informations numériques,
- un moyen de gestion (3) stockant d'une part une structure de données et d'autre part un menu interactif (6) affiché à l'écran (2), ledit menu étant conçu pour naviguer dans la structure de données et comportant au moins deux icônes (6A,6B,6C,6D) dont la position et l'apparence sont sensiblement immuables lors de la navigation,
- un moyen de commande (7) activable par l'utilisateur et conçu pour sélectionner une icône pour déclencher l'action de navigation correspondante,
caractérisé en ce que le moyen de commande (7) comprend une télécommande (7') pourvue d'au moins deux boutons de commande (7A,7B,7C,7D) dont le positionnement spatial relatif et l'apparence sont fixes et correspondent sensiblement à ceux desdites icônes affichées à l'écran.

## Description

La présente invention se rapporte au domaine technique général des systèmes interactifs et en particulier des systèmes interactifs domestiques de type informatiques permettant à un utilisateur d'accéder à des informations, par l'intermédiaire d'un écran affichant lesdites informations sur commande de l'utilisateur.

La présente invention concerne plus particulièrement un système interactif d'affichage d'informations numériques comprenant :
- un écran d'affichage desdites informations numériques,
- un moyen de gestion du contenu affiché par l'écran, ledit moyen de gestion étant connecté à l'écran et stockant d'une part une structure de données incluant lesdites informations numériques et d'autre part un menu interactif destiné à être affiché à l'écran sous le contrôle du moyen de gestion, ledit menu interactif étant conçu pour permettre à un utilisateur de naviguer dans la structure de données et comportant à cet effet au moins deux icônes associées chacune à une action de navigation correspondante dans la structure de données, la position à l'écran et l'apparence des icônes étant sensiblement immuables au cours de la navigation, lesdites icônes pouvant ne pas s'afficher simultanément à l'écran,
- un moyen de commande activable par l'utilisateur et conçu pour permettre à ce dernier de sélectionner l'une desdites icônes pour mettre en oeuvre l'action de navigation correspondante.

La présente invention concerne en outre un procédé d'affichage interactif d'informations numériques à l'aide d'un écran d'affichage desdites informations numériques et d'un moyen de gestion du contenu affiché par l'écran, ledit moyen de gestion étant connecté à l'écran et stockant d'une part une structure de données incluant lesdites informations numériques et d'autre part un menu interactif, ledit procédé comprenant :
- une étape d'affichage dudit menu interactif à l'écran, sous le contrôle du moyen de gestion, ledit menu interactif étant conçu pour permettre à un utilisateur de naviguer dans la structure de données et comportant à cet effet au moins deux icônes associées chacune à une action de navigation correspondante dans la structure de données, la position à l'écran et l'apparence des icônes étant sensiblement immuables au cours de la navigation, lesdites icônes pouvant ne pas s'afficher simultanément à l'écran,
- une étape d'activation, par l'utilisateur, d'un moyen de commande, permettant de sélectionner l'une desdites icônes pour mettre en oeuvre l'action de navigation correspondante.

La présente invention concerne par ailleurs un programme informatique comprenant un moyen de code de programme informatique adapté pour mettre en oeuvre un procédé d'affichage interactif d'informations numériques lorsque ledit programme est exécuté par un moyen de gestion.

La présente invention concerne également un programme informatique tel que celui précité, mis en oeuvre sur un support lisible par un moyen de gestion.

La présente invention concerne par ailleurs un support pouvant être lu par une machine programmable de traitement de l'information et sur lequel est enregistré un programme informatique tel que celui précité.

La présente invention concerne enfin une télécommande pour un système d'affichage interactif d'informations numériques.

Les ordinateurs domestiques sont désormais présents dans de nombreux foyers. Ces appareils permettent une interactivité directe de l'utilisateur, notamment par l'utilisation d'une souris et d'un clavier. Les ordinateurs donnent également accès à des informations numériques sur un écran d'affichage.

Les ordinateurs domestiques rendent accessible une pluralité d'informations, notamment sous forme de textes, d'images, de courriers, etc. Ils permettent également d'accéder, grâce à une connexion à un réseau internet, à une multitude de fonctionnalités, comme par exemple la consultation d'une boîte de messagerie, l'envoi de courriers électroniques, l'échange d'informations sur des forums de discussions, ou encore la visualisation d'images numériques reçues par courriers électroniques ou mises à disposition sur un site internet.

Par ailleurs, les ordinateurs permettent à l'utilisateur, grâce à une connexion à un réseau internet, de communiquer rapidement et simplement avec ses proches ou sa famille même si ces derniers sont éloignés géographiquement. De tels appareils favorisent ainsi la communication entre les personnes et l'échange d'informations en tout genre.

Toutefois, les ordinateurs domestiques, bien que très fonctionnels et permettant une grande interactivité de l'utilisateur, présentent un certain nombre d'inconvénients.

Les ordinateurs, de par leur taille et leur forme, sont en effet des appareils particulièrement encombrants et peu ergonomiques. Ils sont le plus souvent lourds, peu maniables et consommateurs de place.

Par ailleurs, le fonctionnement et l'utilisation des ordinateurs sont généralement compliqués pour un utilisateur peu expérimenté. Ils sont d'ailleurs souvent difficiles à mettre en oeuvre et requièrent des compétences informatiques particulières de l'utilisateur. L'acquisition de ces compétences se fait habituellement à l'aide d'une formation informatique complète et d'une utilisation régulière encadrée.

De surcroît, ces appareils ne sont pas toujours complètement fiables et nécessitent une maintenance régulière. A ce propos, la maintenance de ces appareils est elle-même complexe et nécessite en général l'intervention d'un informaticien ou d'une personne très spécialisée dans le domaine informatique.

L'utilisation d'un ordinateur domestique requiert des compétences spécifiques et n'est donc pas accessible à l'ensemble de la population. Par conséquent, une part non négligeable des individus n'utilise pas les ordinateurs.

Il s'agit des personnes ne sachant pas ou ayant des difficultés à utiliser un ordinateur, notamment des personnes qui n'ont pas reçu de formation pour cette utilisation, des personnes présentant un handicap physique ou mental limitant leur aisance avec l'outil informatique ou encore des personnes âgées peu enclines à s'initier aux nouvelles technologies.

Ainsi, l'accès à l'ordinateur est réservé à une certaine partie de la population capable de s'en servir. Dès lors, une partie importante de la population, notamment les personnes susmentionnées, n'a pas accès aux applications interactives qu'offre l'ordinateur.

A côté des ordinateurs domestiques tels que définis ci-avant, on connaît d'autres systèmes audiovisuels beaucoup plus simples d'utilisation, comme la télévision. Cette technologie permet notamment de recevoir des émissions ou des films sur un poste récepteur, en particulier sur un téléviseur domestique.

La télévision est largement répandue et comprend un nombre croissant de chaînes télévisuelles proposant des programmes variés. On retrouve du reste au moins un téléviseur domestique dans la quasi-totalité des foyers, notamment du fait de son faible coût d'acquisition et de son fonctionnement simple. La télévision permet un accès à un contenu audiovisuel varié de manière simple et rapide.

Elle propose notamment à l'utilisateur la possibilité de visualiser des programmes, par exemple des émissions, des reportages ou encore des journaux télévisés. Elle présente l'avantage de permettre une visualisation directe et simple des programmes télévisuels.

De surcroît, la télévision est utilisée par une très large partie de la population, notamment par les personnes sus-mentionnées qui rencontrent des difficultés avec l'utilisation d'un ordinateur.

Cependant, la télévision présente un certain nombre d'inconvénients.

Elle ne permet pas l'accès à un grand nombre de fonctionnalités pour l'utilisateur, qui peut seulement changer de programme mais n'a pas d'action sur le programme diffusé. Ainsi, la télévision ne propose aucune interactivité à l'utilisateur qui ne peut se comporter qu'en spectateur passif et ne peut pas agir pour modifier le programme en cours de diffusion.

La télévision ne permet par ailleurs pas la visualisation d'images personnelles, de textes et d'informations autres que celles disponibles sur les canaux audiovisuels traditionnels.

De plus, la télévision fournit aux utilisateurs des programmes souvent répétitifs, non interactifs voire peu stimulants au niveau intellectuel.

Elle ne permet par ailleurs pas l'accès aux moyens de communication modernes pour l'utilisateur qui ne bénéficie pas de fait de leurs avantages en matière de communication.

Ceci est d'autant plus dommageable que les personnes susmentionnées utilisant la télévision mais n'ayant pas accès à l'ordinateur sont le plus souvent des personnes seules, parfois isolées de leur famille, ou vivant dans des institutions éloignées de leur famille, et qui ont le plus souvent besoin et envie de communiquer avec leurs proches.

Les objets assignés à l'invention visent en conséquence à porter remède aux inconvénients énumérés précédemment et à proposer un nouveau système interactif d'affichage d'informations numériques simple à mettre en oeuvre et facile à utiliser.

Un autre objet de l'invention vise à proposer un nouveau système interactif d'affichage d'informations numériques mettant en oeuvre un moyen de commande dont l'utilisation est simple et intuitive.

Un autre objet de l'invention vise à proposer un nouveau système interactif d'affichage d'informations numériques qui permet de capter et de maintenir l'attention de l'utilisateur.

Un autre objet de l'invention vise à proposer un nouveau système interactif d'affichage d'informations numériques qui permet une interaction particulièrement conviviale entre le système et l'utilisateur.

Un autre objet de l'invention vise à proposer un nouveau système interactif d'affichage d'informations numériques avec une interface rythmée pour capter l'attention de l'utilisateur.

Un autre objet de l'invention vise à proposer un nouveau système interactif d'affichage d'informations numériques qui donne une impression générale de continuité et de cohérence.

Un autre objet de l'invention vise à proposer un nouveau système interactif d'affichage d'informations numériques qui est explicatif et pédagogique.

Un autre objet de l'invention vise à proposer un nouveau système interactif d'affichage d'informations numériques bon marché.

Un autre objet de l'invention vise à proposer un nouveau système interactif d'affichage d'informations numériques peu encombrant et déplaçable facilement.

Un autre objet de l'invention vise à proposer un nouveau système interactif d'affichage d'informations numériques qui ne nécessite pas nécessairement un investissement financier important.

Un autre objet de l'invention vise à proposer un nouveau système interactif d'affichage d'informations numériques mettant en oeuvre une télécommande extrêmement ergonomique et de manipulation facilitée.

Un autre objet de l'invention vise à proposer un nouveau système interactif d'affichage d'informations numériques rendant particulièrement simple et rapide la communication entre les personnes.

Un autre objet de l'invention vise notamment à proposer un nouveau procédé d'affichage interactif d'informations numériques simple et facile à mettre en oeuvre.

Les objets assignés à l'invention sont atteints à l'aide d'un système interactif d'affichage d'informations numériques comprenant :
- un écran d'affichage desdites informations numériques,
- un moyen de gestion du contenu affiché par l'écran, ledit moyen de gestion étant connecté à l'écran et stockant d'une part une structure de données incluant lesdites informations numériques et d'autre part un menu interactif destiné à être affiché à l'écran sous le contrôle du moyen de gestion, ledit menu interactif étant conçu pour permettre à un utilisateur de naviguer dans la structure de données et comportant à cet effet au moins deux icônes associées chacune à une action de navigation correspondante dans la structure de données, la position à l'écran et l'apparence des icônes étant sensiblement immuables au cours de la navigation, lesdites icônes pouvant ne pas s'afficher simultanément à l'écran,
- un moyen de commande activable par l'utilisateur et conçu pour permettre à ce dernier de sélectionner l'une desdites icônes pour mettre en oeuvre l'action de navigation correspondante,
caractérisé en ce que le moyen de commande comprend une télécommande pourvue d'au moins deux boutons de commande dont le positionnement et l'apparence sont fixes et prédéterminés par construction, lesdits boutons de commande ayant une apparence et une disposition spatiale relative correspondant sensiblement à celles desdites icônes affichées à l'écran.

Les objets assignés à l'invention sont également atteints à l'aide d'un procédé d'affichage interactif d'informations numériques à l'aide d'un écran d'affichage desdites informations numériques et d'un moyen de gestion du contenu affiché par l'écran, ledit moyen de gestion étant connecté à l'écran et stockant d'une part une structure de données incluant lesdites informations numériques et d'autre part un menu interactif, ledit procédé comprenant :
- une étape d'affichage dudit menu interactif à l'écran, sous le contrôle du moyen de gestion, ledit menu interactif étant conçu pour permettre à un utilisateur de naviguer dans la structure de données et comportant à cet effet au moins deux icônes associées chacune à une action de navigation correspondante dans la structure de données, la position à l'écran et l'apparence des icônes étant sensiblement immuables au cours de la navigation, lesdites icônes pouvant ne pas s'afficher simultanément à l'écran,
- une étape d'activation, par l'utilisateur, d'un moyen de commande, permettant de sélectionner l'une desdites icônes pour mettre en oeuvre l'action de navigation correspondante,
ledit procédé étant caractérisé en ce que le moyen de commande comprend une télécommande pourvue d'au moins deux boutons de commande dont le positionnement et l'apparence sont fixes et prédéterminés par construction, lesdits boutons de commande ayant une apparence et une disposition spatiale relative correspondant sensiblement à celles desdites icônes affichées à l'écran.

Les objets assignés à l'invention sont par ailleurs atteints à l'aide d'un programme informatique comprenant un moyen de code de programme informatique adapté pour mettre en oeuvre le procédé d'affichage interactif d'informations numériques lorsque ledit programme est exécuté par le moyen de gestion.

Les objets assignés à l'invention sont par ailleurs atteints à l'aide d'un programme informatique conforme à l'invention mis en oeuvre sur un support lisible par un moyen de gestion.

Les objets assignés à l'invention sont également atteints à l'aide d'un support pouvant être lu par une machine programmable de traitement de l'information et sur lequel est enregistré un programme.

Les objets assignés à l'invention sont enfin atteints à l'aide d'une télécommande pour un système d'affichage interactif d'informations numériques.

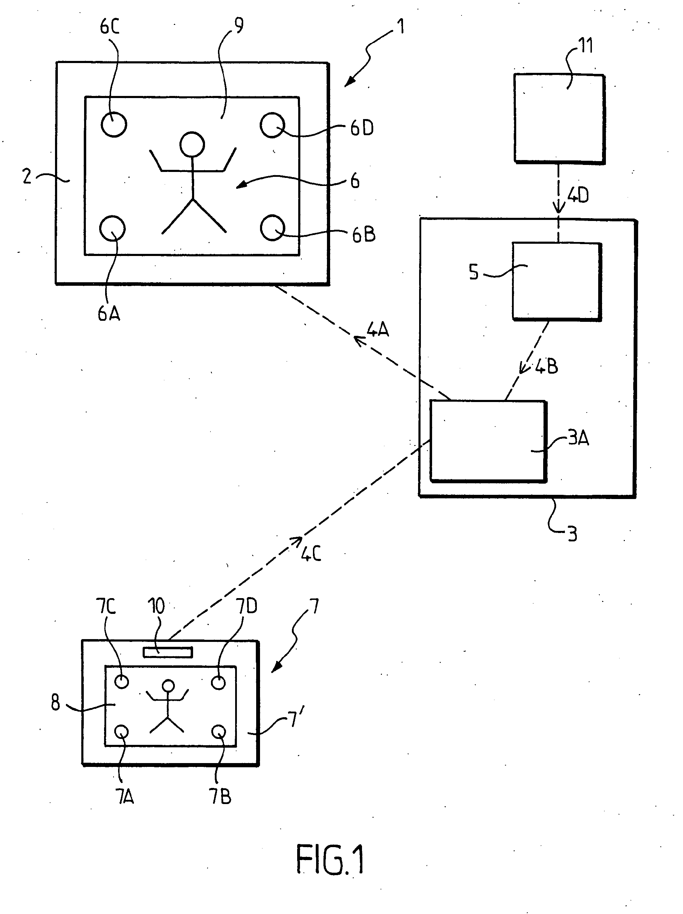

D'autres objets et avantages de l'invention apparaîtront plus en détails à la lecture de la description qui suit, en référence à la figure 1 annexée et donnée à titre purement illustratif et non limitatif, ladite figure 1 illustrant schématiquement le système interactif d'affichage d'informations numériques de l'invention.

L'invention concerne un système interactif d'affichage d'informations numériques. Au sens de l'invention, les informations numériques affichées sont des textes sous format informatique, des images numériques, des documents scannés, des fichiers multimédias, des messages de type courriers électroniques, des agendas électroniques, ... Il peut s'agir de tout type d'informations numériques qui peut être échangé, lu, envoyé, stocké par le biais d'un équipement informatique tel qu'un ordinateur par exemple.

Le système interactif d'affichage d'informations numériques, tel que représenté à la figure 1 annexée, comprend un écran d'affichage 2 desdites informations numériques. L'écran est un écran de téléviseur domestique 1 tel qu'utilisé couramment pour la réception des chaînes de télévision dans les foyers.

Alternativement, il peut s'agir bien évidemment de n'importe quel autre type d'écran d'affichage, savoir notamment un écran d'ordinateur fixe ou portable, un écran haute définition, un écran plasma, un écran plat, un écran LCD ou encore un écran de lecteur de DVD portable. Cette définition de l'écran n'est pas limitative et l'utilisation de tout autre type d'écran permettant l'affichage d'informations numériques est bien entendu envisageable dans le cadre de cette invention.

En outre le système interactif de l'invention comprend un moyen de gestion 3 du contenu affiché à l'écran, ledit moyen de gestion étant connecté à l'écran 2 et stockant d'une part une structure de données incluant lesdites informations numériques et d'autre part un menu interactif 6 destiné à être affiché à l'écran 2 sous le contrôle du moyen de gestion 3.

Au sens de l'invention, on entend par « *moyen de gestion* » un moyen permettant de générer et de contrôler ce qui apparait à l'écran 2. Il s'agit d'une machine programmable de traitement de l'information.

En d'autres termes, le moyen de gestion 3 est en quelque sorte une unité centrale contenant l'ensemble des données permettant le fonctionnement du système interactif, de préférence il comprend un boîtier 3A. Le boîtier 3A présente l'avantage d'être de petite taille par rapport à celle des unités centrales traditionnelles, ce qui le rend facilement transportable, déplaçable et dissimulable, à l'image des boîtiers déjà existants fournis par exemple par les fournisseurs de réseau internet.

Préférentiellement, le moyen de gestion 3 est relié à l'écran 2 susmentionné à l'aide d'un câble 4A ou de tout autre dispositif permettant le transfert des instructions du moyen de gestion à l'écran 2.

De manière préférentielle, le moyen de gestion 3 comprend un boîtier 3A, communément appelé « *set-top-box* », destiné à être connecté à l'écran 2, ainsi qu'un moyen de stockage 5 des données, incorporé dans le boîtier 3A.

Alternativement, le moyen de gestion 3 comprend un boîtier 3A destiné à être connecté à l'écran 2 ainsi qu'un moyen de stockage 5 situé en dehors et à distance dudit boîtier 3A et étant relié fonctionnellement audit boîtier 3A par l'intermédiaire d'un réseau de transmission d'informations numériques, tel que le réseau téléphonique et/ou le réseau internet.

Dans ce mode de réalisation de l'invention représenté à la figure 1, le boîtier 3A est relié préférentiellement à au moins un réseau distant, pouvant être par exemple un réseau internet 11, à l'aide d'un moyen de transmission 4D afin de pouvoir récupérer des données. Dans cette alternative, le boîtier 3A ne contient pas les données qui sont stockées à l'extérieur, dans le moyen de stockage 5 pouvant lui-même être connecté à un ou plusieurs réseaux distants, comme un réseau internet 11, et transmises au boîtier 3A par l'intermédiaire d'un réseau de transmission d'informations 4B qui peut être préférentiellement un réseau internet, un réseau éthernet, un réseau câblé, un réseau hertzien, etc.

Alternativement tout autre type de réseau de transmission d'informations peut être envisagé pour le transfert des données vers le boîtier 3A.

Préférentiellement, les données stockées représentent l'ensemble des informations nécessaire pour le fonctionnement du système interactif de l'invention. Au moins une partie de ces données est avantageusement organisée sous forme d'une structure de données c'est-à-dire qu'elles sont disposées précisément dans une base de données et des liens qui peuvent s'établir entre les données sont définis, notamment afin de pouvoir aisément retrouver lesdites données.

De manière avantageuse, les données sont organisées sous forme d'une arborescence comprenant plusieurs niveaux d'informations. Il existe préférentiellement une stricte hiérarchie et une cohérence entre les données composant l'arborescence.

Selon l'invention, les données présentes aux extrémités de l'arborescence sont avantageusement des informations numériques telles que définies ci-avant. Bien évidemment et sans sortir du cadre de l'invention, toute autre forme organisationnelle des données pourra être envisagée dans la structure de données. Le moyen de gestion 3 permet également le stockage du menu interactif 6. Le menu interactif 6 est conçu pour permettre à un utilisateur de naviguer dans la structure de données et comporte à cet effet au moins deux icônes 6A,6B,6C,6D associées chacune à une action de navigation correspondante dans la structure de données, la position à l'écran 2 et l'apparence des icônes 6A,6B,6C,6D étant sensiblement immuables au cours de la navigation, lesdites icônes pouvant ne pas s'afficher simultanément à l'écran.

Le moyen de gestion 3 est relié à l'écran du téléviseur domestique par un câble 4A. Alternativement, Il est possible que la connexion soit établie entre le téléviseur et le moyen de gestion 3 par tout autre moyen disponible.

De préférence, le menu interactif 6 comprend une pluralité de pages destinées à être affichées l'une après l'autre à l'écran 2, chaque page comportant au moins une icône 6A,6B,6C,6D associée à une action de navigation correspondante dans la structure de données, le passage d'une page à l'autre correspondant à une action de navigation dans la structure de données, la position et l'apparence de ladite icône 6A,6B,6C,6D étant sensiblement immuables d'une page à l'autre.

De manière préférentielle, le menu interactif 6 tel que défini dans l'invention se présente à l'écran 2 sous forme d'une pluralité de pages qui s'enchaîne successivement une par une. Selon l'invention, les pages affichées sont de préférence soit des pages statiques affichant une image unique statique soit des pages dynamiques présentant une courte séquence vidéo.

De manière avantageuse, chaque page telle que définie précédemment comprend au moins une icône 6A,6B,6C,6D, de préférence deux icônes. Au sens de l'invention, une icône est préférentiellement un objet graphique statique, dessiné et non figuratif. De préférence, ladite au moins une icône 6A,6B,6C,6D de l'invention a une couleur sensiblement homogène et un aspect proche des icônes communément rencontré dans les menus interactifs, notamment pour le fonctionnement habituel des périphériques audiovisuels, comme par exemple un lecteur DVD ou un magnétoscope. Tout autre type de forme, d'aspect et/ou de couleur des icônes 6A,6B,6C,6D pourra bien évidemment être envisagé sans sortir du cadre de cette invention.

De manière préférentielle, l'apparence des icônes 6A,6B,6C,6D est constante d'une page à l'autre. De manière avantageuse, le positionnement des icônes 6A,6B,6C,6D sur la page affichée à l'écran est sensiblement identique d'une page à l'autre. Lesdites icônes 6A,6B,6C,6D apparaissent donc préférentiellement avec le même aspect et au même endroit sur la page affichée quelle que soit la page qui s'affiche à l'écran.

Avantageusement, les icônes 6A,6B,6C,6D du menu interactif 6 sont des éléments affichés à l'écran 2 lors du fonctionnement du système informatique et dont l'activation permet une action de navigation dans la structure de données.

Avantageusement, on entend au sens de « *action de navigation* » dans la structure de données un déplacement dans la structure de données, de préférence il s'agit d'un déplacement d'un niveau hiérarchique de données à un autre, qui est associé à l'affichage d'un autre menu dépendant du déplacement précédent dans la structure de données.

De préférence, les icônes 6A,6B,6C,6D telles que définies dans la présente invention ont une position et une apparence à l'écran 2 constantes au cours de la navigation, savoir les icônes 6A,6B,6C,6D apparaissent sensiblement toujours à la même place à l'écran 2 au cours de la navigation par l'utilisateur et leur aspect reste par ailleurs inchangé.

Le système interactif de l'invention comprend également un moyen de commande 7 activable par l'utilisateur et conçu pour permettre à ce dernier de sélectionner l'une desdites icônes 6A,6B,6C,6D pour mettre en oeuvre l'action de navigation correspondante.

De préférence, le moyen de commande 7 est un dispositif permettant à l'utilisateur de choisir une des icônes 6A,6B,6C,6D proposées à l'écran 2 en vue de naviguer dans la structure de données et d'aboutir à un autre niveau de données, de préférence à un autre menu interactif jusqu'à accéder aux informations numériques recherchées (photos numériques, messages électroniques, etc.).

Le moyen de commande 7 comprend une télécommande 7' pourvue d'au moins deux boutons de commande 7A,7B,7C,7D dont le positionnement et l'apparence sont fixes et prédéterminés par construction. En d'autres termes, les boutons de commande 7A,7B,7C,7D présents sur la télécommande 7' de l'invention sont préférentiellement toujours les mêmes savoir qu'ils ont toujours le même aspect et le même positionnement sur ladite télécommande 7'.

De surcroît, lesdits boutons de commande 7A,7B,7C,7D ont une apparence et une disposition spatiale relative correspondant sensiblement à celles desdites icônes 6A,6B,6C,6D affichées à l'écran 2. Avantageusement, l'aspect des boutons de la télécommande 7A,7B,7C,7D correspond sensiblement à l'aspect des icônes 6A,6B,6C,6D affichées à l'écran 2 dans le menu interactif 6. En outre, selon l'invention, les boutons de la télécommande 7A,7B,7C,7D sont positionnés spatialement de manière sensiblement identique aux icônes 6A,6B,6C,6D du menu interactif 6.

En outre, le positionnement relatif desdits boutons de commande 7A,7B,7C,7D est de manière avantageuse sensiblement identique, lorsque l'utilisateur se trouve face à l'écran 2 avec la télécommande 7' en position fonctionnelle, au positionnement relatif desdites icônes 6A,6B,6C,6D affichées à l'écran 2.

En d'autres termes, les pages affichées à l'écran 2 peuvent comprendre deux icônes 6A,6B,6C,6D dont le positionnement et l'aspect à l'écran restent les mêmes quelle que soit la page affichée. De même, les boutons 7A,7B,7C,7D de commande de la télécommande 7' sont fixes sur la télécommande 7'.

De préférence, lorsque l'utilisateur a la télécommande dans les mains ou posée face à lui en position de fonctionnement, c'est-à-dire dans une position permettant un fonctionnement normal du système interactif, les boutons de commande 7A,7B,7C,7D de ladite télécommande 7' ont un aspect et un positionnement relatif sensiblement identique à ceux des icônes 6A,6B,6C,6D affichées à l'écran 2 sur les pages du menu interactif 6.

Les boutons de la télécommande 7A,7B,7C,7D sont préférentiellement de même aspect et agencés spatialement de la même façon que les icônes 6A,6B,6C,6D du menu interactif 6. De préférence, la télécommande 7' comprend au moins deux boutons et de manière préférée quatre boutons. De manière avantageuse, le menu interactif 6 comprend au moins une icône 6A,6B,6C,6D, de préférence deux icônes et de manière particulièrement avantageuse quatre icônes, toutes ne s'affichant pas nécessairement simultanément à l'écran.

Les quatre boutons de commande de la télécommande 7A,7B,7C,7D décrits ci-avant ont de préférence une apparence et un positionnement relatif sensiblement identiques à ceux des quatre icônes 6A,6B,6C,6D du menu interactif 6.

Il est cependant possible que le menu interactif ne comprenne pas le même nombre d'icônes 6A,6B,6C,6D que le nombre fixe de boutons de commande 7A,7B,7C,7D sur la télécommande 7'. En effet, dans certains cas, le menu interactif ne fait intervenir qu'une, deux ou trois icônes 6A,6B,6C,6D alors que la télécommande 7' comprend quatre boutons de commande 7A,7B,7C,7D. Dans ce cas, l'utilisateur est intuitivement stimulé pour appuyer sur le bouton de la télécommande 7' correspondant, par son aspect et sa position spatiale relative, à l'icône 6A,6B,6C,6D affichée.

Avantageusement, l'utilisateur appuie sur le bouton de commande 7A de son choix sur la télécommande 7' en vue de sélectionner l'icône 6A affichée à l'écran correspondant par son aspect et sa position au bouton de commande 7A de la télécommande 7' activé par l'utilisateur.

Une connexion 4C est préférentiellement établie entre la télécommande 7' et le moyen de gestion 3 qui ensuite transmet l'instruction à l'écran 2. La connexion 4C entre la télécommande 7' et le moyen de gestion 3 est de manière avantageuse une connexion infrarouge. Il est bien évidemment possible de choisir de manière alternative tout autre type de connexion.

De surcroît, de manière préférée, la télécommande 7' comporte une image 8 sensiblement représentative de l'image 9 majoritairement présente à l'écran 2 lors de l'affichage du menu interactif 6. Avantageusement, la télécommande est illustrée par une image 8 sur laquelle sont disposés les boutons de commande 7A,7B,7C,7D de ladite télécommande 7', ladite image 8 de la télécommande 7' correspondant sensiblement à l'image 9 de l'écran 2 lors de l'affichage à l'écran 2 du menu interactif 6.

Cette mesure technique présente l'avantage pour l'utilisateur de pouvoir repérer facilement les boutons de commande 7A,7B,7C,7D à utiliser lors du fonctionnement du système interactif, notamment lors du choix de l'icône quand le menu interactif 6 est affiché à l'écran 2. L'association, d'une part de l'aspect et du positionnement relatif sensiblement similaires des boutons 7A,7B,7C,7D de la télécommande 7' par rapport aux icônes 6A,6B,6C,6D de l'écran 2 et, d'autre part, de l'image 8 de la télécommande sensiblement identique à celle 9 de l'écran 2 lors de l'affichage du menu interactif 6, contribue à l'utilisation facilitée et intuitive de la télécommande 7' pour l'utilisateur.

Par ailleurs, la télécommande 7' de l'invention comprend préférentiellement au moins un autre bouton 10 non inclus dans la zone de l'image et ayant une fonctionnalité différente. Il s'agit de manière avantageuse d'un bouton « *aide* » 10, positionné d'une manière sensiblement identique à celle illustrée à la figure 1. Ce bouton 10 permet à l'utilisateur d'interagir à tout moment avec le système interactif sans procéder à une sélection d'un bouton de commande 7A,7B,7C,7D dans le cadre d'un menu interactif 6 tel que défini ci-avant.

En effet, le bouton « *aide* » 10 tel que mentionné précédemment permet par exemple à l'utilisateur de faire appel à tout moment à une rubrique d'aide permettant de répondre à ses interrogations et de l'aiguiller de manière simple dans sa navigation dans le système interactif.

De surcroît, la télécommande 7' a de préférence une face inférieure incurvée pour permettre à l'utilisateur de glisser sa main sous la télécommande 7' lorsque celle-ci repose sur une surface plane, afin de faciliter la préhension de la télécommande. De manière avantageuse, la forme incurvée de l'ensemble de la surface inférieure de ladite télécommande 7' permet à l'utilisateur de pouvoir la prendre facilement sur une table ou un meuble plat, en glissant sa main dessous ladite télécommande 7'.

De manière avantageuse, la télécommande 7' a une face inférieure incurvée pour pouvoir également reposer de manière stable sur une surface bombée, telle que la cuisse de l'utilisateur ou un accoudoir de fauteuil.

Préférentiellement, la forme incurvée de la télécommande permet à l'utilisateur de pouvoir déposer la télécommande sur sa jambe ou sur un accoudoir de fauteuil, ladite télécommande épousant sensiblement le contour de la cuisse de l'utilisateur ou le contour d'un accoudoir. De plus, la télécommande 7' est préférentiellement de taille importante et les boutons de commande 7A,7B,7C,7D peu nombreux sont également bien repérables.

Cette télécommande a donc préférentiellement une excellente ergonomie d'utilisation pour l'utilisateur, notamment pour des personnes présentant des handicaps physiques ou moteurs, des personnes très âgées moins habiles avec leurs mains, des enfants en bas âge ou de manière générale des personnes peu sensibilisées à l'utilisation d'une télécommande en général.

De préférence, dans le système interactif de l'invention, le menu interactif 6 affiché sur l'écran 2 comprend au moins une séquence vidéo élémentaire destinée à se dérouler entre deux actions de navigation dans la structure de données.

De manière avantageuse, le menu interactif 6 affiché sur l'écran 2 comprend une pluralité de séquences vidéo élémentaires se déroulant l'une après l'autre de façon à ce que le menu interactif 6 se présente sous forme d'une séquence vidéo continue.

En d'autres termes, le menu interactif correspond à une séquence de film continue entre chaque sélection d'une icône 6A, 6B, 6C ou 6D par l'utilisateur.

Cette séquence vidéo est préférentiellement interrompue jusqu'à ce que l'utilisateur choisisse une icône 6A, 6B, 6C ou 6D, le choix de ladite icône entraînant la navigation dans la structure de données et l'arrivée vers un autre menu interactif 6 présenté sous forme d'un enchaînement de séquences vidéos élémentaires avec les mêmes icônes 6A,6B,6C,6D mais chacune entraînant une action dans la structure de données différente de celle des icônes 6A,6B,6C,6D du précédent menu interactif 6.

De manière avantageuse, le contenu et l'enchaînement des séquences vidéo élémentaires sont cohérents pour conférer une impression de continuité de l'ensemble.

En effet, l'utilisateur a préférentiellement l'impression de regarder un film ou une émission de télévision, les séquences vidéo s'enchaînant de manière harmonieuse.

En outre, au moins deux des séquences vidéo élémentaires successives sont prises préférentiellement selon des angles de prise de vue différents. De manière avantageuse, l'enchaînement des séquences prises selon des angles de prises de vue différents facilite l'impression de continuité et permet une plus grande flexibilité dans l'enchaînement des séquences vidéo.

Lesdites séquences vidéo sont stockées dans la structure de données avec l'ensemble des données dont les informations numériques, de préférence dans le moyen de stockage 5. Le moyen de gestion 3 permet et contrôle préférentiellement l'enchaînement et l'affichage des séquences vidéo, du menu interactif 6 et des informations numériques.

De manière préférée, au moins quatre plans de prise de vue différents sont utilisés pour la réalisation des séquences vidéo. Avantageusement, on utilise un plan large et un plan resserré dans au moins deux décors différents, les décors pouvant être par exemple une pièce identique filmée avec un angle de prise de vue différent.

A titre d'exemple, les séquences vidéo sont prises dans une bibliothèque selon deux angles, différents l'un de l'autre de 45°, avec des plans plus ou moins larges. On a alors dans cet exemple quatre plans de prise de vue savoir :
- un plan large dans la bibliothèque,
- un plan resserré dans la bibliothèque,
- un plan large près d'une fenêtre,
- un plan resserré près d'une fenêtre.

De manière alternative, un plus grand nombre de plans de prise de vue peut être envisagé, notamment avec un plus grand nombre d'angles de prise de vue et de décors, sans pourtant sortir du cadre de la présente invention.

Une séquence vidéo élémentaire est d'ailleurs préférentiellement choisie en fonction de la compatibilité visuelle de son plan de prise de vue avec le plan de prise de vue de la séquence vidéo élémentaire précédente. Cette mesure permet avantageusement d'éviter les ruptures dans la séquence vidéo générale, de donner du rythme au système interactif tout en captant l'attention de l'utilisateur.

A ce propos, l'attention de l'utilisateur est d'autant plus captée que les séquences vidéo élémentaires représentent de préférence un présentateur donnant des explications orales et gestuelles sur les icônes du menu interactif 6. Ainsi, de manière préférentielle, le menu interactif 6 fait intervenir des séquences vidéo avec un présentateur afin notamment de soutenir l'attention du téléspectateur et de faire en sorte que le système interactif d'affichage d'informations numériques prenne la forme d'une émission télévisuelle.

Le système interactif de l'invention se présente donc de manière avantageuse sous forme d'une émission télévisuelle dans laquelle un présentateur explique de manière orale et à l'aide de gestes simples un menu interactif.

Préférentiellement, les séquences vidéo mettent en oeuvre un présentateur d'apparence humaine. De manière avantageuse, le présentateur est un personnage humain existant, tel par exemple un acteur qui a été filmé sous différents plans de prises de vue afin de créer les séquences vidéo élémentaires susmentionnées. Il est également envisageable sans pour autant que l'on sorte du cadre de cette invention d'utiliser un personnage humanoïde créé par images de synthèse ou tout autre présentateur de quelque nature que ce soit.

De manière avantageuse, l'utilisation d'un présentateur facilite la compréhension de l'utilisateur. En effet, le présentateur explique à l'utilisateur le menu interactif 6 qui s'affiche à l'écran 2, en particulier il explique préférentiellement les icônes 6A,6B,6C,6D affichées à l'écran. Cette explication, à la fois auditive et visuelle, favorise de préférence la compréhension de l'utilisateur.

Le principe de ce système interactif est de permettre de manière préférée à l'utilisateur l'accès à des activités interactives de nature sensiblement identique à celle que l'on rencontre en général lors de l'utilisation d'un ordinateur.

A cette fin, le moyen de gestion 3 est connecté au réseau internet 11 pour récupérer des messages envoyés par courrier électronique à l'utilisateur du système, le moyen de gestion 3 intégrant les courriers électroniques ainsi récupérés dans la structure de données pour permettre à l'utilisateur d'en prendre connaissance par l'intermédiaire du menu interactif 6.

De manière préférentielle, l'utilisateur peut donc lire des messages électroniques grâce à ce système interactif. Il lui suffit pour y parvenir de se laisser guider par le présentateur et de choisir avantageusement les icônes lui permettant d'accéder à ses messages électroniques.

Avantageusement, le moyen de gestion 3 est connecté au réseau internet 11 pour récupérer des images envoyées par courrier électronique ou mises à disposition sur un site internet, le moyen de gestion intégrant les images ainsi récupérées dans la structure de données pour permettre à l'utilisateur d'en prendre connaissance par l'intermédiaire du menu interactif 6.

En d'autres termes, le moyen de gestion 3, qui prend le plus souvent la forme d'un boîtier nommé « *set-top-box* », est connecté à un réseau distant, par exemple au réseau internet 11, sur lequel il récupère les informations numériques, par exemple des images ou des messages électroniques, et les transfère dans la structure de données telle que définie ci-avant.

L'utilisateur peut passer d'un menu interactif à un autre à l'aide de la sélection d'un bouton de commande 7A,7B,7C,7D de la télécommande correspondant à une icône 6A,6B,6C,6D affichée à l'écran. Avec l'aide du présentateur qui le guide pas à pas dans sa navigation, l'utilisateur peut ainsi obtenir les informations numériques recherchées.

Outre la visualisation d'images et de messages électroniques, le système interactif de l'invention permet avantageusement l'affichage d'un agenda ou d'un bloc note. Alternativement, sans que l'on sorte du cadre de la présente invention, le système interactif peut permettre tout autre type d'activités interactives, comme par exemple le visionnage de films.

L'avantage d'un tel dispositif est qu'il s'adresse à toutes les personnes présentant des difficultés avec l'outil informatique, notamment avec les ordinateurs. En effet, la simplicité d'utilisation du système interactif de l'invention le rend accessible à une large partie de la population qui inclue notamment les personnes présentant un handicap physique ou mental, les personnes ne possédant pas les connaissances de base pour l'utilisation d'un ordinateur, les personnes âgées peu motivées pour se former sur les ordinateurs. Le système interactif de l'invention ne se limite d'ailleurs pas aux personnes susmentionnées, il concerne de préférence toutes les personnes rencontrant des difficultés avec l'outil informatique.

De manière préférentielle, le système interactif de l'invention propose à ces personnes la possibilité de s'initier de manière interactive à l'informatique sans aucune formation préalable. A ce propos, il donne accès à ces personnes à des services interactifs, comme par exemple la lecture de messages électroniques ou le visionnage de photos numériques reçus via le réseau internet.

Avantageusement, ce système interactif s'adresse en particulier à des personnes âgées, notamment à des personnes âgées vivant seules ou éloignées de leur famille. Ce système interactif constitue donc de manière préférentielle un système de services interactifs pour personnes âgées, les services interactifs en question étant préférentiellement reliés à un réseau distant, notamment au réseau internet.

Les personnes âgées vivant par exemple seules dans leur maison ou dans des institutions telles que les maisons de retraite n'ont souvent pas beaucoup de contact avec leur famille. Ce système interactif permet de communiquer et garder le contact avec leurs proches et les membres de leur famille, éloignés géographiquement ou par les contraintes quotidiennes.

En effet, le système interactif de l'invention permet aux personnes âgées de recevoir des messages et des photographies de leur famille et de leurs proches. Ce système divertit, occupe et détend les personnes âgées, notamment avec des jeux interactifs. De manière préférée, les personnes âgées peuvent également, à l'aide du dispositif de l'invention, consulter un agenda leur indiquant par exemple toutes les dates importantes de la vie de leur famille (anniversaires, mariages, fêtes de famille, baptêmes, etc.).

Grâce au système interactif de l'invention, les personnes âgées interagissent avec la télévision et reçoivent des informations numériques des membres de leur famille.

L'objet de l'invention concerne en outre un procédé d'affichage interactif d'informations numériques à l'aide d'un écran d'affichage 2 desdites informations numériques et d'un moyen de gestion 3 du contenu affiché par l'écran 2, ledit moyen de gestion 3 étant connecté à l'écran 2 et stockant d'une part une structure de données incluant lesdites informations numériques et d'autre part un menu interactif 6.

Le procédé d'affichage interactif d'informations numériques comprend :
- une étape d'affichage dudit menu interactif 6 à l'écran 2, sous le contrôle du moyen de gestion 3, ledit menu interactif 6 étant conçu pour permettre à un utilisateur de naviguer dans la structure de données et comportant à cet effet au moins deux icônes 6A,6B,6C,6D associées chacune à une action de navigation correspondante dans la structure de données, la position à l'écran 2 et l'apparence des icônes 6A,6B,6C,6D étant sensiblement immuables au cours de la navigation, lesdites icônes 6A,6B,6C,6D pouvant ne pas s'afficher simultanément à l'écran 2.

En d'autres termes, le démarrage du système interactif de l'invention passe préférentiellement par une première étape d'affichage à l'écran du menu interactif 6 comprenant des icônes 6A,6B,6C,6D. Le fonctionnement du système interactif peut entraîner le retour à cette étape d'affichage du menu interactif à chaque fois que nécessaire, notamment pour passer d'une activité à une autre, pour revenir au menu précédent, etc.
- une étape d'activation par l'utilisateur, à l'aide d'un moyen de commande 7, permettant de sélectionner l'une desdites icônes 6A,6B,6C,6D pour mettre en oeuvre l'action de navigation correspondante,
   ledit procédé étant caractérisé en ce que le moyen de commande 7 comprend une télécommande 7' pourvue d'au moins deux boutons de commande 7A,7B,7C,7D dont le positionnement et l'apparence sont fixes et prédéterminés par construction, lesdits boutons de commande 7A,7B,7C,7D ayant une apparence et une disposition spatiale relative correspondant sensiblement à celles desdites icônes 6A,6B,6C,6D affichées à l'écran.

De manière préférentielle, le fonctionnement du système interactif tel que décrit ci-avant conduit à l'affichage sur l'écran 2 d'un menu interactif 6, ledit menu interactif 6 étant expliqué par un présentateur.

L'utilisateur peut de préférence choisir entre plusieurs possibilités, matérialisées à l'écran 2 par des icônes 6A,6B,6C,6D, qui sont toujours représentées de la même façon et au même endroit de l'écran, tel que cela a été expliqué dans ce qui précède.

Le choix de l'utilisateur est effectué de préférence à l'aide d'une télécommande 7' sur laquelle sont disposés des boutons de commande 7A,7B,7C,7D, lesdits boutons de commande présentant l'avantage d'avoir exactement le même aspect et le même positionnement relatif que les icônes 6A,6B,6C,6D de l'écran. De plus, la télécommande 7' présente de préférence une image 8 qui correspond sensiblement à celle 9 de l'écran lors de l'affichage du menu interactif 6.

Ainsi, l'utilisateur, à l'aide de sa télécommande, peut choisir préférentiellement de manière facilitée l'icône correspondant à son choix.

De préférence, le moyen de gestion 3, intervenant dans le procédé d'affichage interactif d'informations numériques, est une machine programmable de traitement de l'information.

Alternativement, le moyen de gestion 3 peut être tout dispositif permettant de stocker des données, de les traiter, de les transmettre, savoir tout dispositif pouvant remplir les fonctions principales d'un ordinateur.

La présente invention concerne en outre un programme informatique comprenant un moyen de code de programme informatique adapté pour mettre en oeuvre le procédé d'affichage interactif d'informations numériques lorsque ledit programme est exécuté par le moyen de gestion 3.

Avantageusement, le programme informatique est mis en oeuvre sur un support lisible par le moyen de gestion 3.

L'invention concerne par ailleurs un support pouvant être lu par une machine programmable de traitement de l'information et sur lequel est enregistré un programme.

Au sens de l'invention, un support lisible par un moyen de gestion ou par une machine programmable de traitement de l'information peut être tout type de support habituellement utilisé en informatique pour ce type d'application, savoir par exemple une carte mère d'un ordinateur, un disque dur interne ou externe, ou encore un serveur distant du système interactif.

Enfin, la présente invention concerne une télécommande pour un système d'affichage interactif d'informations numériques. La télécommande de l'invention présente avantageusement une excellente ergonomie et une utilisation simple et intuitive.

La présente invention présente l'intérêt de permettre l'accès aux services interactifs à des personnes n'ayant pas la possibilité ou la capacité de se servir d'un ordinateur.

Le système interactif de l'invention s'adresse particulièrement aux personnes susmentionnées qui veulent communiquer avec leur famille et recevoir des informations numériques de manière à la fois simple et ne demandant pas nécessairement un investissement financier important.

En effet, le dispositif de l'invention présente également l'avantage de demander un investissement matériel faible pour l'utilisateur puisqu'il peut nécessiter seulement de posséder un téléviseur domestique. L'abonnement à un fournisseur d'accès à internet représente par ailleurs un coût relativement faible.

De surcroît, ce système interactif permet de proposer à des personnes n'ayant pas accès à l'ordinateur des activités intellectuellement stimulantes grâce à l'interactivité inhérente au système tout en leur facilitant et en développant la communication avec les membres de leur famille.

Ce système présente enfin l'avantage d'être facile d'installation et de petite taille, ce qui favorise sa mise en place très simple dans une maison d'habitation, un foyer de personnes ou dans des institutions spécialisées, comme les maisons de retraite ou les hôpitaux.

## Revendications

1. Système interactif d'affichage d'informations numériques comprenant :
- un écran d'affichage (2) desdites informations numériques,
- un moyen de gestion (3) du contenu affiché par l'écran (2), ledit moyen de gestion (3) étant connecté à l'écran (2) et stockant d'une part une structure de données incluant lesdites informations numériques et d'autre part un menu interactif (6) destiné à être affiché à l'écran (2) sous le contrôle du moyen de gestion (3), ledit menu interactif (6) étant conçu pour permettre à un utilisateur de naviguer dans la structure de données et comportant à cet effet au moins deux icônes (6A,6B,6C,6D) associées chacune à une action de navigation correspondante dans la structure de données, la position à l'écran (2) et l'apparence des icônes (6A,6B,6C,6D) étant sensiblement immuables au cours de la navigation, lesdites icônes (6A,6B,6C,6D) pouvant ne pas s'afficher simultanément à l'écran (2),
- un moyen de commande (7) activable par l'utilisateur et conçu pour permettre à ce dernier de sélectionner l'une desdites icônes (6A,6B,6C,6D) pour mettre en oeuvre l'action de navigation correspondante,
**caractérisé en ce que** le moyen de commande (7) comprend une télécommande (7') pourvue d'au moins deux boutons de commande (7A,7B,7C,7D) dont le positionnement et l'apparence sont fixes et prédéterminés par construction, lesdits boutons de commande (7A,7B,7C,7D) ayant une apparence et une disposition spatiale relative correspondant sensiblement à celles desdites icônes (6A,6B,6C,6D) affichées à l'écran.

2. Système interactif selon la revendication 1 **caractérisé en ce que** la télécommande (7') comporte une image (8) sensiblement représentative de l'image (9) majoritairement présente à l'écran (2) lors de l'affichage du menu interactif (6).

3. Système interactif selon la revendication 1 ou 2 **caractérisé en ce que** la télécommande (7') a une face inférieure incurvée pour pouvoir reposer de manière stable sur une surface bombée, telle que la cuisse de l'utilisateur ou un accoudoir de fauteuil.

4. Système interactif selon l'une des revendications 1 à 3 **caractérisé en ce que** la télécommande (7') a une face inférieure incurvée pour permettre à l'utilisateur de glisser sa main sous la télécommande (7') lorsque celle-ci repose sur une surface plane, afin de faciliter la préhension de la télécommande (7').

5. Système interactif selon la revendication 1 ou 2 **caractérisé en ce que** le menu interactif (6) affiché sur l'écran (2) comprend au moins une séquence vidéo élémentaire destinée à se dérouler entre deux actions de navigation dans la structure de données.

6. Système interactif selon la revendication 5 **caractérisé en ce que** le menu interactif (6) affiché sur l'écran (2) comprend une pluralité de séquences vidéo élémentaires se déroulant l'une après l'autre de façon à ce que le menu interactif (6) se présente sous forme d'une séquence vidéo continue.

7. Système interactif selon la revendication 5 ou 6 **caractérisé en ce que** le contenu et l'enchaînement des séquences vidéo élémentaires est cohérent pour conférer une impression de continuité de l'ensemble.

8. Système interactif selon l'une des revendications 5 à 7 **caractérisé en ce qu'**au moins deux des séquences vidéo élémentaires successives sont prises selon des angles de prise de vue différents.

9. Système interactif selon l'une des revendications 5 à 8 **caractérisé en ce que** chaque séquence vidéo élémentaire est choisie en fonction de la compatibilité visuelle de son plan de prise de vue avec le plan de prise de vue de la séquence vidéo élémentaire précédente.

10. Système interactif selon l'une des revendications 5 à 9 **caractérisé en ce que** les séquences vidéo élémentaires représentent un présentateur donnant des explications sur les icônes du menu interactif.

11. Système interactif selon l'une des revendications précédentes **caractérisé en ce que** l'écran (2) est un écran de téléviseur domestique.

12. Système interactif selon l'une des revendications 1 à 11 **caractérisé en ce que** le moyen de gestion (3) comprend un boîtier (3A) destiné à être connecté à l'écran (2), ainsi qu'un moyen de stockage (5) des données, incorporé dans le boîtier (3A).

13. Système interactif selon l'une des revendications 1 à 11 **caractérisé en ce que** le moyen de gestion (3) comprend un boîtier (3A) destiné à être connecté à l'écran (2) ainsi qu'un moyen de stockage (5) situé en dehors et à distance dudit boîtier (3A) et étant relié fonctionnellement audit boîtier (3A) par l'intermédiaire d'un réseau de transmission d'informations numériques, tel que le réseau téléphonique et/ou le réseau internet.

14. Système interactif selon l'une des revendications précédentes **caractérisé en ce que** le moyen de gestion (3) est connecté au réseau internet (11) pour récupérer des messages envoyés par courrier électronique à l'utilisateur du système, le moyen de gestion (3) intégrant les courriers électroniques ainsi récupérés dans la structure de données pour permettre à l'utilisateur d'en prendre connaissance par l'intermédiaire du menu interactif (6).

15. Système interactif selon l'une des revendications précédentes **caractérisé en ce que** le moyen de gestion (3) est connecté au réseau internet (11) pour récupérer des images envoyées par courrier électronique ou mises à disposition sur un site internet, le moyen de gestion intégrant les images ainsi récupérées dans la structure de données pour permettre à l'utilisateur d'en prendre connaissance par l'intermédiaire du menu interactif (6).

16. Système interactif selon l'une des revendications précédentes **caractérisé en ce qu'**il constitue un système de services interactifs pour personnes âgées.

17. Procédé d'affichage interactif d'informations numériques à l'aide d'un écran d'affichage (2) desdites informations numériques et d'un moyen de gestion (3) du contenu affiché par l'écran (2), ledit moyen de gestion (3) étant connecté à l'écran (2) et stockant d'une part une structure de données incluant lesdites informations numériques et d'autre part un menu interactif (6), ledit procédé comprenant :
- une étape d'affichage dudit menu interactif (6) à l'écran (2), sous le contrôle du moyen de gestion (3), ledit menu interactif (6) étant conçu pour permettre à un utilisateur de naviguer dans la structure de données et comportant à cet effet au moins deux icônes (6A,6B,6C,6D) associées chacune à une action de navigation correspondante dans la structure de données, la position à l'écran et l'apparence des icônes (6A,6B,6C,6D) étant sensiblement immuables au cours de la navigation, lesdites icônes (6A,6B,6C,6D) pouvant ne pas s'afficher simultanément à l'écran (2),
- une étape d'activation, par l'utilisateur, d'un moyen de commande (7), permettant de sélectionner l'une desdites icônes (6A,6B,6C,6D) pour mettre en oeuvre l'action de navigation correspondante,
ledit procédé étant **caractérisé en ce que** le moyen de commande (7) comprend une télécommande (7') pourvue d'au moins deux boutons de commande (7A,7B,7C,7D) dont le positionnement et l'apparence sont fixes et prédéterminés par construction, lesdits boutons de commande (7A,7B,7C,7D) ayant une apparence et une disposition spatiale relative correspondant sensiblement à celles desdites icônes (6A,6B,6C,6D) affichées à l'écran.

18. Procédé d'affichage interactif d'informations numériques selon la revendication 17 **caractérisé en ce que** le moyen de gestion (3) est une machine programmable de traitement de l'information.

19. Programme informatique comprenant un moyen de code de programme informatique adapté pour mettre en oeuvre le procédé d'affichage interactif d'informations numériques conforme à la revendication 18 lorsque ledit programme est exécuté par le moyen de gestion (3).

20. Programme informatique selon la revendication 17 mis en oeuvre sur un support lisible par le moyen de gestion (3).

21. Support pouvant être lu par une machine programmable de traitement de l'information et sur lequel est enregistré un programme conforme à la revendication 20.

22. Télécommande (7') pour un système d'affichage interactif d'informations numériques conforme à l'une des revendications 1 à 16.
